# EUROPEAN PATENT APPLICATION

(11) **EP 2 270 674 A1**
(43) Date of publication of application: **05.01.2011**
(21) Application number: 10166482.9
(22) Date of filing: 18.06.2010
(51) Int. Cl.: G06F 13/38

(54) **Input-output controlling apparatus and electronic musical instrument**

(30) Priority: 23.06.2009 JP 2009148243
(71) Applicant: Casio Computer Co., Ltd., Tokyo 151-8543 (JP)
(72) Inventor: Hatano, Yusuke, Tokyo 205-8555 (JP)
(74) Representative: Grünecker, Kinkeldey, Stockmair & Schwanhäusser Anwaltssozietät

(57) **Abstract**

An input-output I/F has a pull-up register 38 whose one end is connected to signal line of D+ terminal and other end is connected to a power line and a controlling unit for controlling effectiveness of connection between the power line and the other end of the pull-up register. The controlling unit makes pull-up of the pull-up register ineffective, breaking connection between the power line and the other end of the pull-up register, in accordance with an instruction of switching USB class from a first state of a first USB class to a second state of a second USB class different from the first USB class, and when the USB class has been switched to the second state of the second USB class, the controlling unit makes pull-up of the pull-up register effective again, making connection between the power line and the other end of the pull-up register.

## Description

### CROSS REFERENCE TO RELATED APPLICATIONS

The present application is based upon and claims the benefit of priority from the prior Japanese Application No. 2009-148243, filed June 23, 2009, entire contents of which are incorporated herein by reference.

### BACKGROUND OF THE INVENTION

### 1. Field of the Invention

The present invention relates to an input-output controlling apparatus for controlling data input-output operation with an external apparatus such as personal computers, and relates to an electronic musical instrument having the input-output controlling apparatus.

### 2. Description of the Related Art

Conventional electronic musical instruments are provided with two or three 5-pin DIN connectors, and exchanges data with other apparatuses such as electronic musical instruments and personal computers (PC) through such DIN connectors in accordance with MIDI (Musical Instrument Digital Interface) specifications. In recent, USB (Universal Serial Bus) is proposed for data communication between information devices, and is widely used as general-purpose interface. The USB terminal conforming to the current USB 2.0 specifications has four terminals such as VBUS, D+, D-, and GND. A device connected with host equipment through USB cable is supplied with power through VBUS terminal and exchanges data with the host equipment through D+ terminal and D- terminal of the USB terminal.

With the widespread use of USB, electronic musical instruments appear in the market, which are equipped with USB terminals for data communication with the host equipment such as PC. For example, Japanese Patent No. 2004-151749 A discloses a technique in an electronic musical instrument equipped with both MIDI terminal and USB terminal, which technique allows data communication with a device connected through MIDI terminal and MIDI cable, when the electronic musical instrument is not connected with PC through USB terminal and USB cable. Further, when the electronic musical instrument is connected with PC through USB terminal and USB cable, the instrument receives data (MIDI data) from other device through the MIDI terminal, and sends PC the data through the USB terminal and USB cable, and further receives data from PC through the USB terminal and sends other device the data through the MIDI terminal. Further, the electronic musical instrument receives data from PC through the USB terminal and USB cable, and sends data to PC through the USB terminal and USB cable.

In recent, USB cable and MIDI interface are put into practical use, which are capable of transferring and/or receiving data in conformity with MIDI specifications using USB terminal.

However, in the case of performing data communication using USB cable in accordance with MIDI specifications, when data other than messages conforming to MIDI specifications such as note on, note off and program change is transferred, the data has to be converted into MIDI message in a device. But the process of converting data into MIDI message invites a problem of decreasing efficiency in data transmission.

In the case where data communication is executed between host equipment such as PC and an electronic musical instrument to exchange a large amount of data therebetween, it is preferable to make the electronic musical instrument operate as a mass storage class device for the data communication. Therefore, it is preferable that the electronic musical instrument is capable of executing data communication in conformity with MIDI specifications as well as in accordance with USB class (for example, the mass storage class).

It is possible to make the electronic musical instrument execute data communication through USB cable as the mass storage device. But a troublesome procedure is necessary in conventional electronic musical instruments, that is, at first USB connector is pulled out from PC or the electronic musical instrument to switch the state of electronic musical instrument to the mass storage device, and then the USB connector is inserted into said device again.

### SUMMARY OF THE INVENTION

The present invention has an object to provide an input-output apparatus, which allows data communication between electronic musical instruments and host equipment such as personal computers without requiring a user to execute trouble manipulation of pulling out and/or insertion of USB connector, and an electronic musical instrument equipped with the input-output apparatus.

According to one aspect of the invention, there is provided an input-output controlling apparatus connected to USB terminal (16), for performing data communication with host equipment (12) through the USB terminal and USB cable (14), the apparatus which comprises a pull-up register (38) whose one end is connected to a positive signal line in the USB terminal and other end is connected to a power source line (40), and a controlling unit (37, 39, 21) for controlling effectiveness of connection between the power source line and the other end of the pull-up register, wherein the controlling unit makes pull-up of the pull-up register ineffective, breaking connection between the power source line and the other end of the pull-up register, in accordance with an instruction of switching USB class from a first state according to a first USB class to a second state according to a second USB class, wherein the second USB class is different from the first USB class, and when the USB class has been switched to the second state according to the second USB class, the controlling unit makes pull-up of the pull-up register effective again, making connection between the power source line and the other end of the pull-up register.

According another aspect of the invention, there is provided an electronic musical instrument connected to USB terminal (16), for performing data communication with host equipment (12) through the USB terminal and USB cable (14), the electronic musical instrument, which comprises a pull-up register (38) whose one end is connected to a positive signal line in the USB terminal and other end is connected to a power source line (40), and a controlling unit (37, 39, 21) for controlling effectiveness of connection between the power source line and the other end of the pull-up register, wherein the controlling unit makes pull-up of the pull-up register ineffective, breaking connection between the power source line and the other end of the pull-up register, in accordance with an instruction of switching USB class from a first state according to a first USB class to a second state according to a second USB class, wherein the second USB class is different from the first USB class, and when the USB class has been switched to the second state according to the second USB class, the controlling unit makes pull-up of the pull-up register effective again, making connection between the power source line and the other end of the pull-up register, and one of the first USB class and the second USB class is USB class which operates as MIDI device conforming to MIDI specifications, and the other of the first USB class and the second USB class is USB class which operates as a mass storage device, and which instrument further comprises a data transferring/receiving unit (21) for transferring and/or receiving data in accordance with the first USB class, and for transferring and/or receiving data in accordance with the second USB class, and an operator (25) for receiving a switching operation of the first state according to the first USB class and a switching operation of the second state according to the second USB class.

### BRIEF DESCRIPTION OF THE DRAWINGS

FIG. 1 is a view schematically illustrating an electronic musical instrument and a personal computer in the present embodiments of the invention.
FIG. 2 is a block diagram of a configuration of the electronic musical instrument in the embodiment of the invention.
FIG. 3 is a block diagram of a configuration of the input-output I/F according to the embodiment of the invention.
FIG. 4 is a flow chart schematically showing processes to be performed in the electronic musical instrument in the embodiment of the invention.
FIGs. 5 to 7 are flow charts of an example of a status switching process performed in the embodiment of the invention.
FIG. 8 is a flow chart of an external data communication process to be executed in the embodiment of the invention.
FIG. 9 is a flow char of an example of a keyboard process to be performed in the embodiment of the invention.
FIG. 10 is a flow chart of an example of a sound generating process to be executed in the embodiment of the invention.

### DETAILED DESCRIPTION OF THE PREFERRED EMBODIMENTS

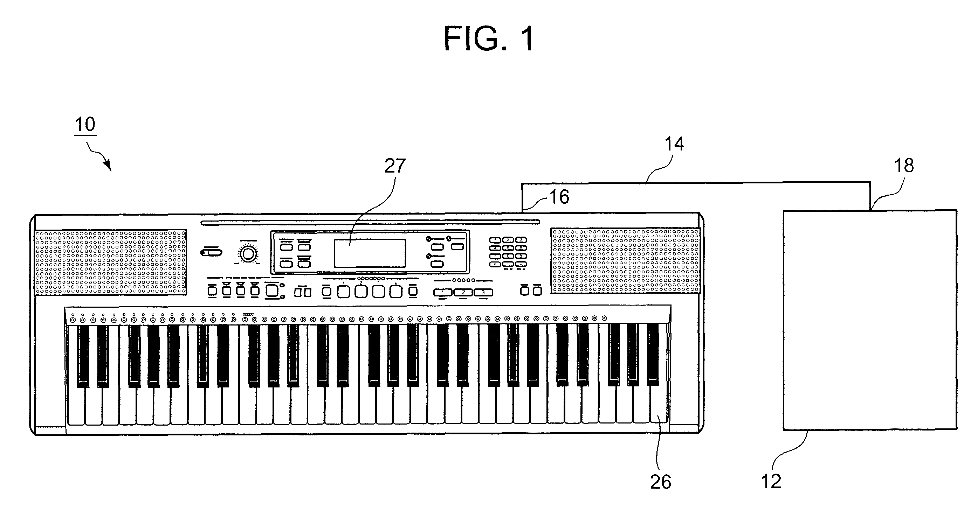

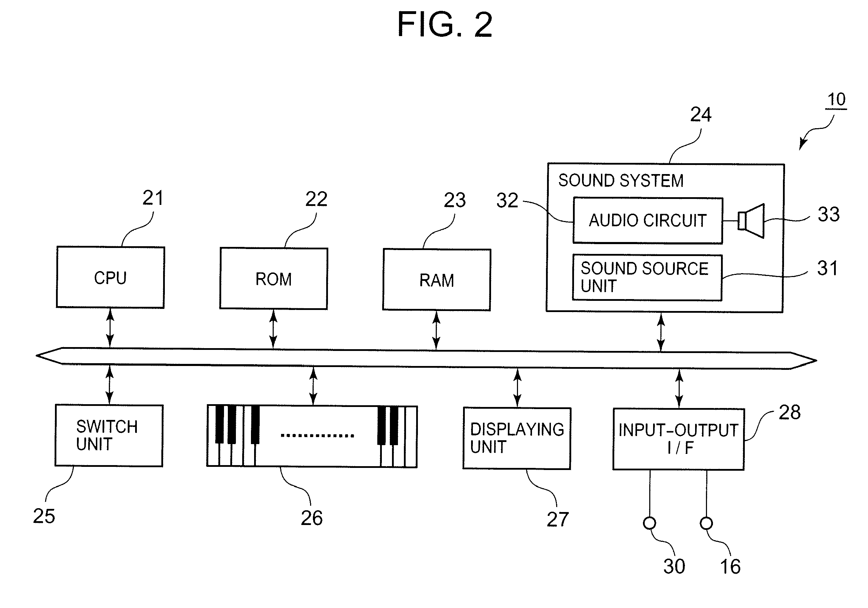

Embodiments of the present invention will be describe with reference to the accompanying drawings in detail. FIG. 1 is a view schematically illustrating an electronic musical instrument and a personal computer connected thereto in the present embodiments of the invention. ' As shown in FIG. 1, an electronic musical instrument 10 is equipped with a keyboard 26 and a displaying unit 27. Further, the electronic musical instrument 10 has a switch unit 25 (FIG. 2) including various switches, which will be described in detail later. Further, the electronic musical instrument 10 is provided with USB terminal 16, to which USB cable 14 is connected. In FIG. 1, the other end of USB cable 14 is connected to USB terminal 18 of a personal computer (PC) 12.

When PC 12 is connected to the electronic musical instrument 10 through USB cable 14, PC 12 serves as host equipment. PC 12 is equipped with a first host controller (not shown) and a second host controller (not shown), wherein the first host controller is capable of performing data communication with a device of a mass storage class and the second host controller is capable of performing data communication with MIDI device conforming to the USB specifications.

FIG. 2 is a block diagram of a configuration of the electronic musical instrument 10 in the embodiment of the present invention. As shown in FIG. 2, the electronic musical instrument 10 according to the embodiment comprises CPU 21, ROM 22, RAM 23, a sound system 24, the switch unit 25, keyboard 26, the displaying unit 27 and an input-output interface (I/F) 28. The input-output I/F 28 is connected with USB terminal 16 and MIDI terminal 30. MIDI terminal 30 has a 5-pin DIN connector conforming to MIDI.

CPU 21 controls whole operation of the electronic musical instrument 10. Further, CPU 21 detects operating states of keys of the keyboard 26 and operated states of switches of the switch unit 25, and controls the sound system 24 in accordance with the detected operating states of the keys of the keyboard 26 and the detected operating states of the switches of the switch unit 25. In the embodiment, CPU 21 cooperates with the input-output I/F 28, thereby controlling the electronic musical instrument 10 so as to operate as a device belonging to either one of plural USB classes. As will be described in detail later, when the electronic musical instrument 10 executes data communication with external host equipment (PC 14 in the embodiment), the electronic musical instrument 10 operates as either one of MIDI device conforming to the USB specifications and a device of a mass storage class. Hereinafter, a state (current status) of the electronic musical instrument 10 which operates as MIDI device conforming to the USB specifications will be called as MIDI device, and a state (current status) of the electronic musical instrument 10 which operates as the device of a mass storage class will be called as a mass storage device. In the description, USB class, in which the electronic musical instrument 10 operates as MIDI device conforming to the USB specifications will be called as "MIDI class", and USB class, in which the electronic musical instrument 10 operates as the mass storage device will be called as "Mass Storage Class".

ROM 22 stores a program for CPU 21 to execute various processes such as an on-off operation of the keyboard, a process of generating musical tones corresponding to switch operation and pressed keys, a process of switching a status of the electronic musical instrument 10, and data communication with an external device in accordance with the status of the electronic musical instrument 10. ROM 22 stores waveform data in its waveform data area, which waveform data is used to produce musical tones of piano, guitar, bass drum, snare drum and cymbal. RAM 23 temporarily stores the program read from ROM 22 and data produced in the course of the processes.

The sound system 24 comprises a sound source unit 31, audio circuit 32 and a speaker 33. Receiving a note-on event relating to the pressed key from CPU 21, the sound source unit 31 reads predetermined waveform data from the waveform data area of ROM 22 to generate and output musical-tone data of a certain pitch. The sound source unit 31 is capable of outputting waveform data, particularly, waveform data of tone colors of percussion instruments such as the snare drum, bass drum and cymbal as musical-tone data. The audio circuit 32 D/A converts musical-tone data and amplifies an analog signal, thereby outputting an audio signal from the speaker 33.

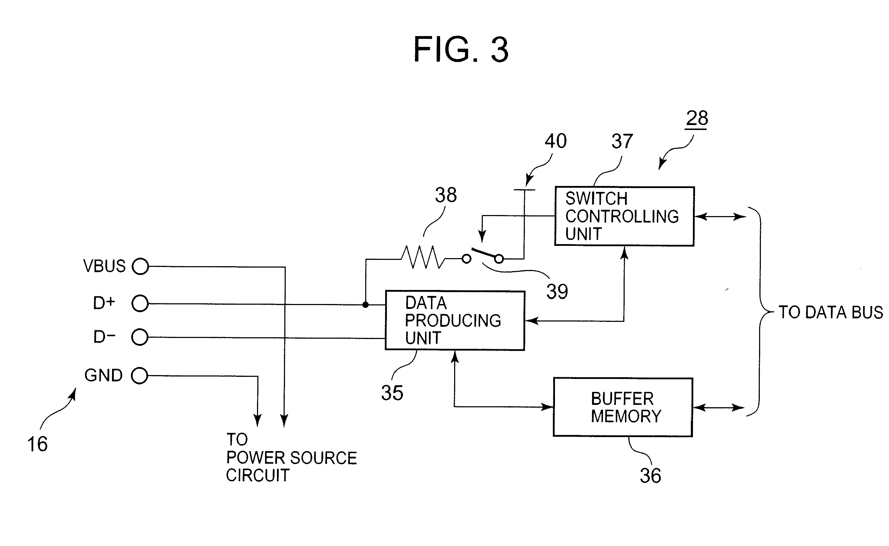

FIG. 3 is a block diagram of a configuration of the input-output I/F 28 according to the embodiment of the invention. As shown in FIG. 3, the input-output I/F 28 comprises a data producing unit 35, buffer memory 36 and switch controlling unit 37. The data producing unit 35 produces receiving data based on a signal received from the USB terminal 16, and produces a signal to be output from the USB terminal 16. The buffer memory 36 temporarily stores data produced by the data producing unit 35 and data to be read by the data producing unit 35. The switch controlling unit 37 controls operation of a switch 39 connected between a pull-up register 38 and power source line 40.

The USB terminal 16 conforms to the USB 2.0 specifications, and has a power source terminal (VBUS), two differential pair terminals (D+ terminal and D-terminal), and a ground terminal (GRD). Signal lines from the differential pair terminals (D+ terminal and D-terminal) are connected to the data producing unit 35. The signal line from the positive differential terminal (D+ terminal) is connected to one end of the pull-up register 38.

The other end of the pull-up register 38 is connected to the switch 39. The switch controlling unit 37 controls the on-off operation of the switch 39. When the switch controlling unit 37 turns on the switch 39, the signal line connected to the D+ terminal is connected to the power source line 40 through the pull-up register 38, whereby the signal line is basically kept at a high level. Meanwhile, when the switch controlling unit 37 turns off the switch 39, the signal line is brought into an unstable state. In the present embodiment, the input-output I/F 28 and CPU 21 compose an input-output controlling apparatus.

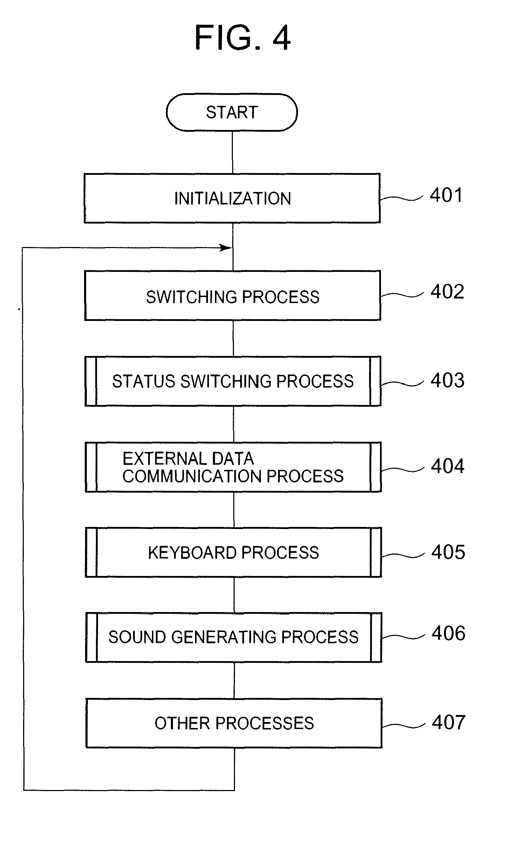

Processes to be performed by the electronic musical instrument having the configuration described above will be described. FIG. 4 is a flow chart schematically showing processes to be performed in the electronic musical instrument 10 according to the embodiment. As shown in FIG. 4, when a power is turned on in the electronic musical instrument 10, an initialization is executed at step 401, where CPU 21 clears data temporarily stored in the buffer memory 36 of the input-output I/F 28 and deletes an image displayed on a screen of the displaying unit 27. After the initialization, the switch 39 of the input-output I/F 28 is kept on and the pull-up register 38 is connected to the power source line 40, whereby the signal line connected to D+ terminal is kept at a high level. When the initialization finishes at step 401, CPU 201 executes a switching process at step 402.

In the switching process at step 402, CPU 21 detects operated state of the switches of the switch unit 25 and stores the detected operated state of the switches in RAM 23, and executes processes in accordance with the detected operated state of the switches as needed. In the present switching process, even when the status selecting switch (not shown) is turned on, information indicating that the status selecting switch (not shown) is turned on is stored in RAM 23.

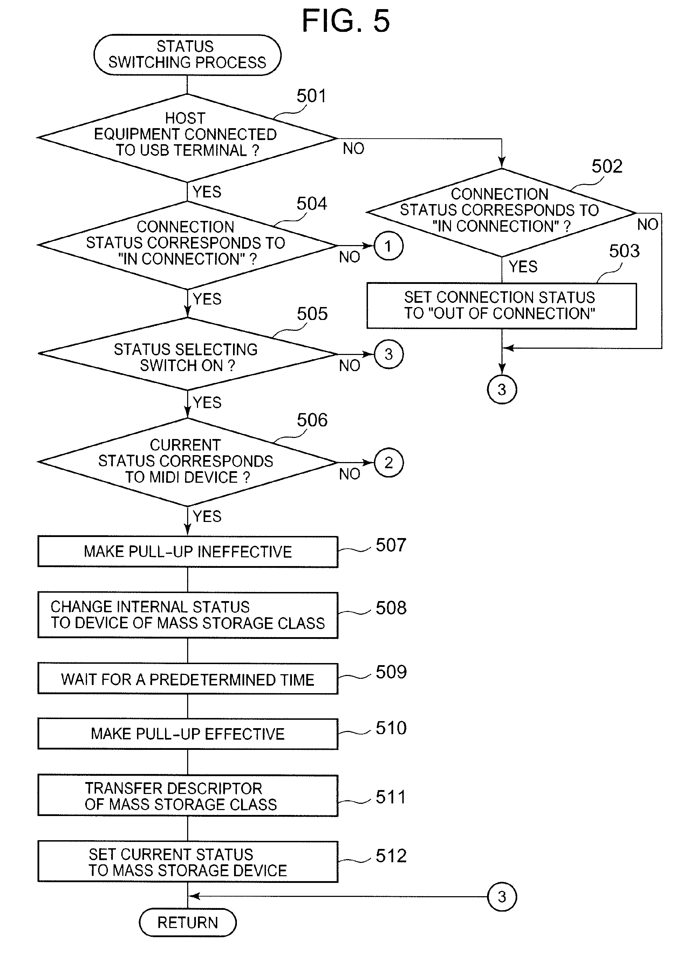

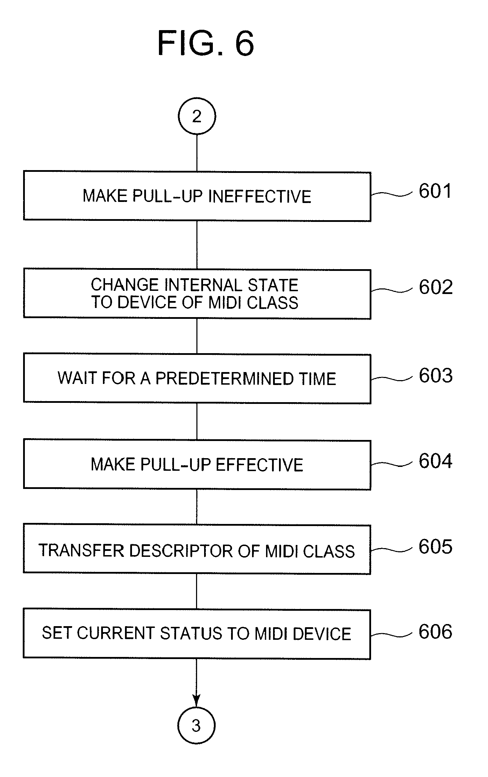

When the switching process finishes (step 402), CPU 21 detects a connection of the USB terminal 16 to the host equipment (PC 14 in the embodiment) through USB cable, and executes the status switching process at step 403, wherein data is transferred to the host equipment. FIGs. 5 to 7 are flow charts of the status switching process performed in the present embodiment. CPU 21 judges at step 501 in FIG. 5 whether or not the host equipment is connected to the USB terminal 16 through USB cable. When it is determined at step 501 that the host equipment is not connected to the USB terminal 16 (NO at step 501), CPU 21 judges at step 502 whether or not a connecting status corresponds to "in connection".

In the present embodiment, the connecting status can take either one of two values, one value corresponding to "in connection" and the other corresponding to "out of connection". For example, when the connecting status corresponds to "in connection", "connecting status = 1" is true, and when the connecting status corresponds to "out of connection", "connecting status = 0" is true. In the electronic musical instrument 10, the input-output I/F 28 periodically confirms a voltage at the power source terminal VBUS of the USB terminal 16. When a predetermined voltage is detected at the power source terminal VBUS, the connection of the host equipment to USB terminal can be detected.

In the present embodiment, the status (current status) for defining data communication between the electronic musical instrument and the connected host equipment can take either one of two values, one value corresponding to "MIDI device" and the other corresponding to "Mass Storage Device". For example, when the current status takes "MIDI device", "current status = 1" is true, and when the current status takes "Mass Storage Device", "current status = 0" is true. The value of the connection status and current status are stored in RAM 23.

When it is determined at step 502 that the connecting status does not correspond to "in connection" (NO at step 502), the status switching process finishes. In the case it is determined NO both at step 501 and at step 502, this means that the connection status corresponds to "out of connection" in the electronic musical instrument 10 and that USB connector has not been connected to the USB terminal 16 thereafter. Meanwhile, when it is determined at step 502 that the connecting status corresponds to "in connection" (YES at step 502), CPU 21 sets a value corresponding to "out of connection" to the connection status at step 503. In the case it is determined NO at step 501 and YES at step 502, this means that USB connector is pulled out from the USB terminal 16.

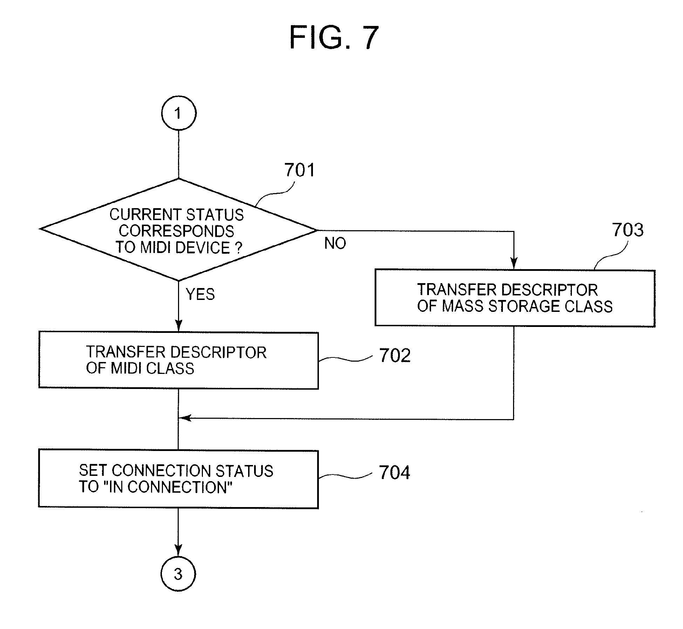

When it is determined at step 501 that the host equipment is connected to the USB terminal 16 (YES at step 501), CPU 21 judges at step 504 whether or not the connection status corresponds to "in connection". In the case it is determined YES at step 501 and NO at step 504, this means that USB connecter has been connected to the USB terminal 16 thereafter. Then, CPU 21 executes a predetermined process in accordance with the "current status". When it is determined NO at step 504, CPU 21 judges at step 701 in FIG. 7 whether or not the current status takes a value corresponding to "MIDI device".

In the case it is determined at step 701 that the current status takes a value corresponding to "MIDI device" (YES at step 701), when it is detected that the input-output I/F 28 has received a descriptor request through the USB terminal 16, in response to the descriptor request CPU 21 gives the input-output I/F 28 an instruction of transferring of a descriptor of MIDI class. In accordance with the instruction, the input-output I/F 28 transfers the descriptor of MIDI class to the host equipment connected thereto through the USB terminal 16 at step 702, whereby the host equipment (PC 14 in the present embodiment) connected through the USB cable recognizes a device (the electronic musical instrument 10 according to the embodiment) connected thereto through the USB cable as MIDI device.

Meanwhile, in the case it is determined at step 701 that the current status does not take a value corresponding to "MIDI device" (NO at step 701), when it is detected that the input-output I/F 28 has received a descriptor request through the USB terminal 16, in response to the descriptor request CPU 21 gives the input-output I/F 28 an instruction of transferring of a descriptor of a mass storage class. In accordance with the instruction, the input-output I/F 28 transfers the descriptor of a mass storage class to the host equipment connected thereto through the USB terminal 16 at step 703, whereby the host equipment (PC 14 in the present embodiment) connected through the USB cable recognizes a device (the electronic musical instrument 10 according to the embodiment) connected thereto through USB cable as a mass storage device. After executing the process at step 702 or at step 703, CPU 21 sets the connection status to a value corresponding to "in connection". A value indicating the connection status is stored in RAM 23.

When it is determined YES at step 504 in FIG. 5, CPU 21 judges at step 505 whether or not the status selecting switch has been turned on. The state of the status selecting switch is detected in the switching process at step 204 in FIG. 2 and stored in RAM 23. When it is determined at step 505 that the status selecting switch has not been turned on (NO at step 505), the process finishes.

When it is determined at step 505 that the status selecting switch has been turned on (YES at step 505), CPU 21 judges at step 506 whether or not the current status takes a value corresponding to "MIDI device". When it is determined at step 506 that the current status takes a value corresponding to "MIDI device" (YES at step 506), CPU 21 gives the switch controlling unit 37 of the input-output I/F 28 an instruction of making pull-up by the pull-up register 38 ineffective, that is, an instruction of turning off the switch 39 at step 507. The switch controlling unit 37 turns off the switch 39 in accordance with the instruction, whereby the signal line of D+ terminal is brought to an unstable state.

In PC 14 connected through the USB cable, it is detected that the signal line of D+ terminal is in an unstable state. PC 14 serves as the host controller and, since the signal line of D+ terminal remains in an unstable state, PC 14 determines that the USB connecter has been pulled out from the USB terminal in the electronic musical instrument 10 and in PC 14, even though the USB connecter is not actually pulled out from the USB terminal in the electronic musical instrument 10 and in PC 14.

After the switch controlling unit 37 turns off the switch 39 at step 507, CPU 21 changes an internal state of the electronic musical instrument 10 so as to work as the device of a mass storage class (step 508). For example, a driver (not shown) of the device of a mass storage class is driven, and then CPU 21 waits for a certain period of time (for example, 1 second) at step 509. After the certain period of time lapses, CPU 21 gives the switch controlling unit 37 of the input-output I/F 28 an instruction of making pull-up by the pull-up register 38 effective, that is, an instruction of turning on the switch 39 at step 510, whereby the signal line of D+ terminal is pulled-up and kept at a high level. Since the signal line of D+ terminal is changed in level from an unstable level to a high level, PC 14 determines that the USB connecter has been inserted into the USB terminal in the electronic musical instrument 10 and in PC 14, even though the USB connecter has not been inserted into the USB terminal thereafter in the electronic musical instrument 10 and in PC 14.

When it is detected that the input-output I/F 28 has received the descriptor request through the USB terminal 16, in response to the descriptor request CPU 21 gives the input-output I/F 28 an instruction of transferring the descriptor of a mass storage class. In accordance with the instruction, the input-output I/F 28 transfers the descriptor of a mass storage class to PC 14 at step 511. As a result, PC 14 recognizes the electronic musical instrument 10 connected through the USB cable as a mass storage device. CPU 21 sets a value indicating a "mass storage device" to the current status at step 512.

When it is determined at step 506 that the current status does not take a value corresponding to "MIDI device" (NO at step 506), CPU 21 gives the switch controlling unit 37 of the input-output I/F 28 an instruction of making pull-up by the pull-up register 38 ineffective, that is, an instruction of turning off the switch 39 at step 601. In accordance with the instruction, the switch controlling unit 37 turns off the switch 39, whereby the signal line of D+ terminal is brought into an unstable state. In PC 14 connected through the USB cable, it is detected that the signal line of D+ terminal remains in an unstable state. PC 14 serves as the host controller and, since the signal line of D+ terminal remains in an unstable state, PC 14 determines that the USB connecter has been pulled out from the USB terminal in the electronic musical instrument 10 and in PC 14, even though the USB connecter is not actually pulled out from the USB terminal in the electronic musical instrument 10 and in PC 14.

After the switch controlling unit 37 turns off the switch 39 at step 507, CPU 21 changes an internal state of the electronic musical instrument 10 so as to work as the device of MIDI class (step 602). For example, a driver (not shown) of the device of MIDI class is driven, and then CPU 21 waits for a certain period of time (for example, 1 second) at step 603. After the certain period of time lapses, CPU 21 gives the switch controlling unit 37 of the input-output I/F 28 an instruction of making pull-up by the pull-up register 38 effective, that is, an instruction of turning on the switch 39 at step 604, whereby the signal line of D+ terminal is pulled-up and basically kept at a high level. Since the signal line of D+ terminal is changed in level from an unstable level to a high level, PC 14 determines that the USB connecter has been inserted into the USB terminal in the electronic musical instrument 10 and in PC 14, even though the USB connecter has not been actually inserted into the USB terminal thereafter in the electronic musical instrument 10 and in PC 14.

When it is detected that the input-output I/F 28 has received the descriptor request through the USB terminal 16, in response to the descriptor request CPU 21 gives the input-output I/F 28 an instruction of transferring the descriptor of MIDI class. In accordance with the instruction, the input-output I/F 28 transfers the descriptor of MIDI class to the connected host equipment at step 605. As a result, PC 14 recognizes the electronic musical instrument 10 connected through the USB cable as MIDI device. CPU 21 sets a value indicating a "MIDI device" to the current status at step 606.

In the present embodiment, when the status selecting switch is turned on, the signal line of D+ terminal of the USB terminal 16 is brought into an unstable state. Therefore, even though the USB connector is not actually pulled out from the USB terminal 16, it is determined in the connected host equipment (PC 14) that the USB connector has been pulled out from the USB terminal 16. CPU 21 changes the internal state of the electronic musical instrument 10, bringing the signal line of D+ terminal to a high level, whereby it is determined in the connected host equipment (PC 14) that the SUB connector has been inserted into the USB terminal 16 again. In the present embodiment, even though the USB connector is actually inserted into the USB terminal 16 or is actually pulled out from the USB terminal 16, the internal state of the electronic musical instrument 10 can be changed. Therefore, data communication can be executed as different USB devices without actually inserting the USB connector into the USB terminal or pulling out the USB connector from the USB terminal.

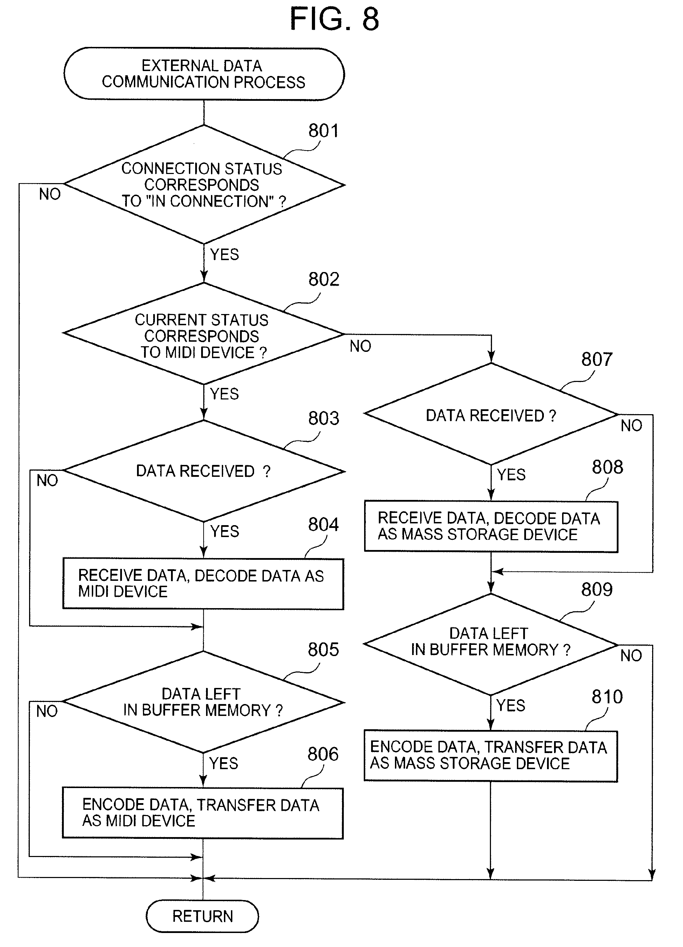

After the status switching process at step 403 in FIG. 4, CPU 21 executes an external data communication process at step 404. FIG. 8 is a flow chart of the external data communication process to be executed in the present embodiment. CPU 21 refers to the connection status stored in RAM 23 to judge whether or not the connection status corresponds to "in connection" at step 801. When it is determined at step 801 that the connection status corresponds to "in connection" (YES at step 801), CPU 21 judges at step 802 whether or not the current status corresponds to "MIDI device".

When it is determined at step 802 that the current status corresponds to "MIDI device" (YES at step 802), CPU 21 judges at step 803 whether or not the input-output I/F 28 has received data. When it is determined at step 803 that the input-output I/F 28 has received data (YES at step 803), CPU 21 gives the input-output I/F 28 an instruction to receive and decode data as MIDI device. The input-output I/F 28 works in accordance with the instruction at step 804. The encoded data is temporarily stored in the buffer memory 36, and read by CPU 21 and stored in a predetermined area of RAM 23.

CPU 21 judges at step 805 whether or not any data to be transferred is left in the buffer memory 36. When it is determined at step 805 that data to be transferred is left in the buffer memory 36 (YES at step 805), CPU 21 gives the input-output I/F 28 an instruction to transfer data as MIDI device. The input-output I/F 28 reads data from the buffer memory 36 and encodes the data in accordance with MIDI specifications, transferring the encoded data from the USB terminal 16 at step 806.

When it is determined at step 802 that the current status does not correspond to "MIDI device" (NO at step 802), CPU 21 judges at step 807 whether or not the input-output I/F 28 has received data. When it is determined at step 807 that the input-output I/F 28 has received data (YES at step 807), CPU 21 gives the input-output I/F 28 an instruction to receive and decode data as the mass storage device. The input-output I/F 28 works in accordance with the instruction at step 808. The encoded data is temporarily stored in the buffer memory 36, and read by CPU 21 and stored in a predetermined area of RAM 23.

CPU 21 judges at step 809 whether or not any data to be transferred is left in the buffer memory 36. When it is determined at step 809 that data to be transferred is left in the buffer memory 36 (YES at step 809), CPU 21 gives the input-output I/F 28 an instruction to transfer data as the mass storage device. The input-output I/F 28 reads data from the buffer memory 36 and encodes the data in accordance with the specifications of the mass storage device, transferring the encoded data from the USB terminal 16 at step 810.

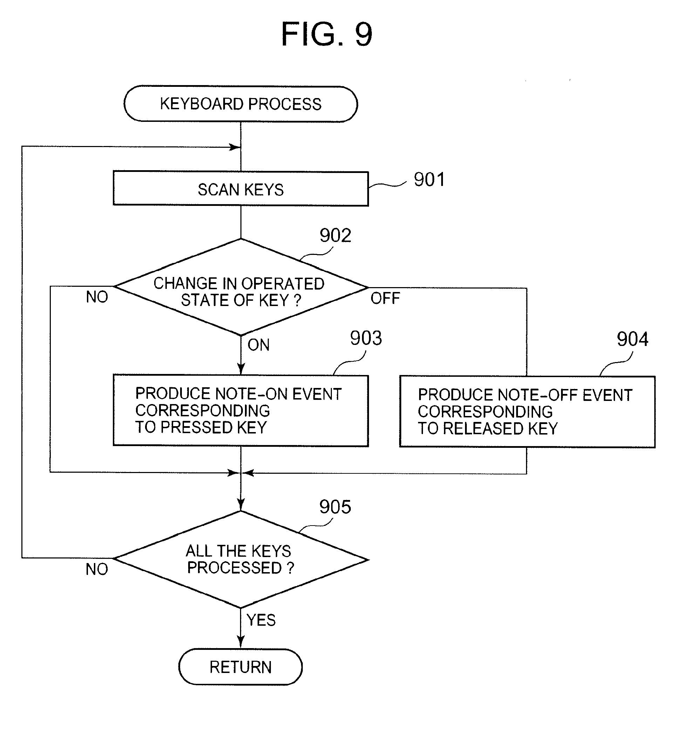

After the external data communication process is performed at step 404 in FIG. 4, CPU 21 executes a keyboard process at step 405. FIG. 9 is a flow chart of the keyboard process to be performed in the present embodiment. CPU 21 scans the operated states of keys of the keyboard 26 in predetermined order (for example, in ascending order of pitch) at step 901, thereby judging whether or not any change in the operated state of a key to be processed at step 902. When CPU 21 detects the pressed key at step 902, CPU 21 produces a note-on event indicating generation of a musical tone having a pitch corresponding to the pressed key at step 903. Meanwhile, CPU 21 detects the released key at step 902, CPU 21 produces a note-off event indicating cease of generation of a musical tone having a pitch corresponding to the released key at step 904. The note-on event and note-off event are stored in a predetermined area of RAM 23.

After the process is performed at step 903 or 904, or when no change is detected in the operated state of key at step 902, CPU 21 judges at step 905 whether or not the process has been executed with respect to all the keys of the keyboard 26. When it is determined at step 905 that the process has not been executed with respect to all the keys of the keyboard 26 (NO at step 905), CPU 21 returns to step 901. Meanwhile, when it is determined YES at step 905, the process finishes.

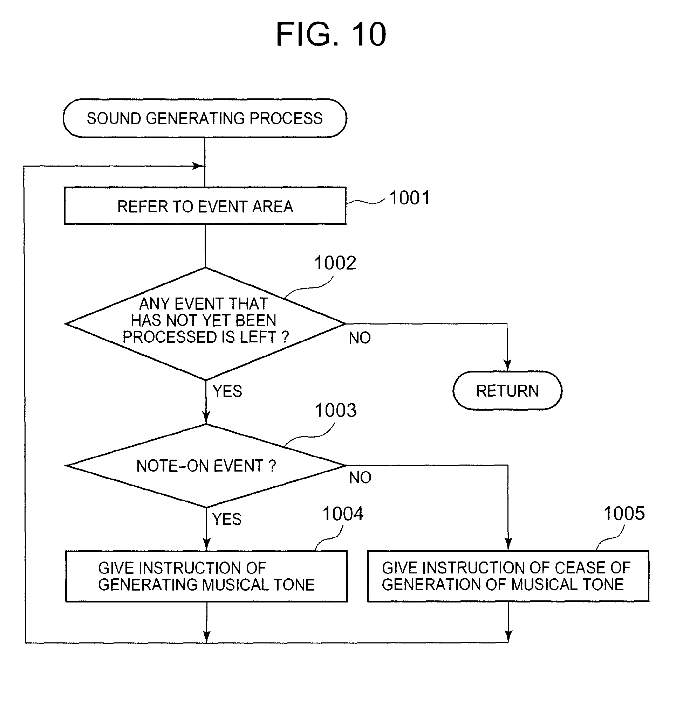

After the keyboard process is performed at step 405 in FIG. 5, a sound generating process is executed at step 406. FIG. 10 is a flow chart of the sound generating process to be executed in the present embodiment. CPU 21 refers to an event area of RAM 23 at step 1001, judging whether or not any event that has not yet been processed is left in the event area of the RAM 23 at step 1002. When it is determined at step 1002 that no event has been left (NO at step 1002), the process finishes. When it is determined at step 1002 that an event that has not yet been processed is left (YES at step 1002), CPU 21 judges at step 1003 whether or not the event is a note-on event. When it is determined at step 1003 that the event is a note-on event (YES at step 1003), CPU 21 gives the sound source unit 31 an instruction of generating a musical tone having a pitch indicated by the note-on event with predetermined tone color at step 1004. In response to the instruction, the sound source unit 31 reads from ROM 22 waveform data of designated tone color and pitch, and multiplies the waveform data by a value based on an envelope to produce musical-tone data. The musical-tone data is output from the audio circuit 32.

When it is determined at step 1003 that the event is not a note-on event (NO at step 1003), that is, when the event is a note-off event, CPU 21 gives the sound source unit 31 an instruction of cease of generation of a musical tone having a pitch indicated by the note-off event at step 1005. In response to the instruction, the sound source unit 31 multiplies the waveform data by the envelop gradually released to produce musical-tone data. The musical-tone data is output from the audio circuit 32.

After the sound generating process executed at step 406, CPU 21 executes other necessary process at step 407 in FIG. 4,' and then returns to step 402. The process at step 407 includes a process of renewal of an image to be displayed on the screen of the displaying unit 27, a process of data communication in conformity with MIDI specifications with other apparatuses including electronic musical instruments connected through the MIDI terminal 30 and MIDI cable (not shown), and a process based on received MIDI data.

In the present embodiment, the input-output I/F 28 includes the pull-up register 38, switch 39 and switch controlling unit 37 as shown in FIG. 3. A series connection of the pull-up register 38' and switch 39 is connected between the signal line of the D+ terminal of the USB terminal 16 and the power source line 40. The switch controlling unit 37 controls on-off operation of the switch 39. In accordance with an instruction given by CPU 21 of switching USB class from the first state according to the first USB class to the second state according to the second USB class, the switch controlling unit 37 makes pull-up by the pull-up register 38 ineffective, that is, turns off the switch 39 to disconnect the pull-up register 38, breaking connection between the power source line 40 and the signal line of D+ terminal. When the USB class has been switched to the second state according to the second USB class, the switch controlling unit 37 makes pull-up of the pull-up register 38 effective again, that is, turns on the switch 39 to connect the pull-up register 38, making connection between the power source line 40 and the signal line of D+ terminal again.

In the present embodiment, since the pull-up register 38 is disconnected or the signal line of D+ terminal is not connected to the power source line 40, the host equipment connected through the, USB cable recognizes that the USB connector is pulled out. When the pull-up register 38 is connected or the signal line of D+ terminal is connected to the power source line 40 through the pull-up register 38, the host equipment recognizes that the USB connector has been inserted into an input-output apparatus and the host equipment is connected to the USB terminal again. Therefore, the apparatus can be switched to USB class device without a user's troublesome manipulation of inserting into or pulling out the USB cable from the USB terminal.

In the present embodiment, the input-output I/F 28 has the switch 39, which serves to make or break connection between the signal line of D+ terminal and the power source line 40. The switch controlling unit 37 controls the switch 39 to keep the signal line of D+ terminal at a certain voltage level (effective voltage level, or a pulled-up level) or keep the signal line ineffective. A simple configuration described above can keep the signal line of D+ terminal at the effective level (pulled-up level) or ineffective.

In the present embodiment, after the signal line of D+ terminal has been brought to the effective voltage level (pulled-up level), in response to a request of transferring a descriptor from the host equipment connected through USB cable, the descriptor of the second USB class is transferred to the host equipment, whereby USB class is switched with no USB cable actually pulled out or inserted into the USB terminal 16, and thereafter data communication can be executed in the second state in accordance with the second USB class.

Further, in the present embodiment, the input-output I/F 28 includes the data producing unit 35 connected to the signal line of D+ terminal and the signal line of D- terminal, and the buffer memory 36. The data producing unit 35 decodes and/or encodes data in accordance with the current USB class to produce a signal to be sent. The buffer memory 36 temporarily stores the data produced or to be processed by the data producing unit 35. With the above configuration, data can be received from apparatuses such as the electronic musical instruments having the input-output I/F 28 and appropriate data can be supplied to the apparatuses.

In the electronic musical instrument according to the embodiment, in the case the current status takes a value indicating "MIDI device", CPU 21 and the input-output I/F 28 serve as MIDI device which can exchange data with the host equipment. In the case the current status takes a value indicating "Mass Storage Device", CPU 21 and the input-output I/F 28 serve as the mass storage device which can exchange data with the host equipment.

Although specific embodiment of the present invention has been described in the foregoing detailed description, it will be understood that the invention is not limited to the particular embodiments described herein, but is capable of numerous rearrangements, modifications, and substitutions without departing from the scope of the invention.

In the embodiment, the electronic musical instrument 10 operates as either one of MIDI device and the mass storage device, and performs data communication with the host equipment (PC 14) through the USB terminal 16 and USB cable. But the electronic musical instrument can operate as a device of other USB class.

The electronic musical instrument including the input-output controlling apparatus, described in the present embodiment has a keyboard, but is not limited to those having a keyboard. The invention may be applied to instruments of a sound source module type for so-called DTM (Dest Top Music).

What is claimed is:
1. An input-output controlling apparatus connected to USB terminal, for performing data communication with host equipment (12) through the USB terminal (16) and USB cable (14), the apparatus comprising:
   a pull-up register (38) whose one end is connected to a positive signal line in the USB terminal and other end is connected to a power source line (40); and
   a controlling unit (37, 39, 21) for controlling effectiveness of connection between the power source line and the other end of the pull-up register, wherein
   the controlling unit makes pull-up of the pull-up register ineffective, breaking connection between the power source line and the other end of the pull-up register, in accordance with an instruction of switching USB class from a first state according to a first USB class to a second state according to a second USB class, wherein the second USB class is different from the first USB class, and when the USB class has been switched to the second state according to the second USB class, the controlling unit makes pull-up of the pull-up register effective again, making connection between the power source line and the other end of the pull-up register.
2. The input-output controlling apparatus according to claim 1, wherein
   the controlling unit has a switch (39) for making or breaking connection between the power source line and the other end of the pull-up register, and turns off the switch, breaking connection between the power source line and the other end of the pull-up register, in accordance with the instruction of switching USB class from the first state according to the first USB class to the second state according to the second USB class, and turns on the switch, making connection between the power source line and the other end of the pull-up register again, when the USB class has been switched to the second state according to the second USB class.
3. The input-output controlling apparatus according to claim 1, wherein
   the controlling unit has made pull-up of the pull-up register effective again, and then transfers a descriptor of the second USB class to the host equipment upon receipt of a request from the host equipment for transferring the descriptor of the second USB class.
4. The input-output controlling apparatus according to claim 1, further comprising:
   a data producing unit (35) connected to the signal line, for receiving a signal through the signal line to decode data and encode data in accordance with the current USB class, producing a signal to be sent; and
   a data storing unit (36) for temporarily storing the data decoded and data to be encoded by the data producing unit.
5. An electronic musical instrument connected to USB terminal (16), for performing data communication with host equipment (12) through the USB terminal and USB cable (14), the electronic musical instrument comprising:
   a pull-up register (38) whose one end is connected to a positive signal line in the USB terminal and other end is connected to a power source line (40); and
   a controlling unit (37, 39, 21) for controlling effectiveness of connection between the power source line and the other end of the pull-up register, wherein
   the controlling unit makes pull-up of the pull-up register ineffective, breaking connection between the power source line and the other end of the pull-up register, in accordance with an instruction of switching USB class from a first state according to a first USB class to a second state according to a second USB class, wherein the second USB class is different from the first USB class, and when the USB class has been switched to the second state according to the second USB class, the controlling unit makes pull-up of the pull-up register effective again, making connection between the power source line and the other end of the pull-up register, and one of the first USB class and the second USB class is USB class which operates as MIDI device conforming to MIDI specifications, and the other of the first USB class and the second USB class is USB class which operates as a mass storage device, and the electronic musical instrument further comprising:
   a data transferring/receiving unit (21) for transferring and/or receiving data in accordance with the first USB class, and for transferring and/or receiving data in accordance with the second USB class; and
   an operator (25) for receiving a switching operation of the first state according to the first USB class and a switching operation of the second state according to the second USB class.

## Claims

1. An input-output controlling apparatus connected to USB terminal (16), for performing data communication with host equipment (12) through the USB terminal and USB cable (14), **CHARACTERIZED IN THAT**
the controlling apparatus comprises:
a pull-up register (38); and
a controlling unit (37, 39, 21), wherein the pull-up register is connected at one end to a positive signal line in the USB terminal and is connecter at other end to a power source line (40), and the controlling unit controls effectiveness of connection between the power source line and the other end of the pull-up register, wherein
the controlling unit makes pull-up of the pull-up register ineffective, breaking connection between the power source line and the other end of the pull-up register, in accordance with an instruction of switching USB class from a first state according to a first USB class to a second state According to a second USB class wherein the second USB class is different from the first USB class, and when the USB class has been switched to the second state according to the second USB class, the controlling unit makes pull-up of the pull-up register effective again, making connection between the power source line and the other end of the pull-up register.

2. The input-output controlling apparatus according to claim 1, wherein
the controlling unit has a switch (39) for making or breaking connection between the power source line and the other end of the pull-up register, and turns off the switch, breaking connection between the power source line and the other end of the pull-up register, in accordance with the instruction of switching USB class from the first state according to the first URSA class to the second state according to the second USB class, and turns on the switch, making connection between the power source line and the other end of the pull-up register again, when the USB class has been switched to the second state according to the second USB class,

3. The input-output controlling apparatus according to claim 1, wherein
the controlling unit has made pull-up of the pull-up register effective again, and then transfers a descriptor of the second USB class to the host equipment upon receipt of a request from the host equipment for transferring the descriptor of the second USB class.

4. The input-autput controlling apparatus according to claim 1, further comprising:
a data producing unit (35) connected to the signal line, for receiving a signal through the signal line to decode data and encode data in accordance with the current USB class, producing a signal to be seat; and
a data storing unit (36) for temporarily storing the data decoded and data to be encoded by the data producing unit,

5. An electronic musical instrument connected to USB terminal (16), for performing data communication with host equipment (12) through the use terminal and USB cable (14), **CHARACTERIZED IN THAT**
the musical instrument comprises:
a pull-up register (38); and
a controlling unit (37, 39, 21), wherein the pull-up register is connected at one end to a positive signal line in the USB terminal and is connected at other end to a power source line (40) and the controlling unit control effectiveness of connection between the power source line and the other end of the pull-up register, wherein
the controlling unit makes pull-up of the pull-up register ineffective, breaking connection between the power source line and the other end of the pull-up register, in accordance with an instruction of switching USB class from a first state according to a first USB class to a second statue according to a second USB class, wherein the second USB class is different from the first USB class, and when the USB class has been switched to the second state according to the second USB classy the controlling unit makes pull-up of the pull-up register effective again, making connection between ths power source line and the other end of the pull-up register, and one of the first USB class and the second USB class is USB class which operates as MIDI device conforming to MIDI specifications, and the other of the first USB class and the second USB class is USB class which operates as a mass storage device, and the musical instrument further comprises:
a data transferring/receiving unit (21) for transferring and/or receiving data in accordance with the first USB class, and for transferring and/or receiving data in accordance with the second USE class; and
an operator (25) for receiving a switching operation of the first state according to the first USB class and a switching operation of the second state according to the second USB class.
